# EUROPEAN PATENT SPECIFICATION

(11) **EP 1 268 675 B1**
(45) Date of publication and mention of the grant of the patent: **22.10.2003**
(21) Application number: 01915607.4
(22) Date of filing: 27.03.2001
(51) Int. Cl.: C09B 67/26, C09D 11/00, C09B 62/20

(54) **USE OF A DYE COMPOSITION FOR INKJET PRINTING**
VERWENDUNG EINER FARBSTOFFZUSAMMENSETZUNG IM TINTENSTRAHLDRUCKVERFAHREN
UTILISATION D'UNE COMPOSITION DE COLORANTS POUR IMPRIMANTE A JET D'ENCRE

(30) Priority: 28.03.2000 CH 600002000
(43) Date of publication of application: 02.01.2003
(73) Proprietor: Clariant Finance (BVI) Limited, Road Town, Tortola (VG)
(72) Inventor: HASEMANN, Ludwig, 79379 Müllheim-Niederweiler (DE); PEDRAZZI, Reinhard, CH-4123 Allschwil (CH); GEISENBERGER, Josef, 65843 Sulzbach (DE); RITTER, Josef, 65812 Bad Soden (DE); MACHOLDT, Hans-Tobias, 64297 Darmstadt (DE); WUZIK, Andreas, 86836 Untermeitingen (DE)
(74) Representative: Kachholz, Traudel
(86) International application number: IB0100508
(87) International publication number: WO01072907

(56) References cited:
- EP-A- 0 713 903
- WO-A-98/53009
- WO-A-99/63005
- GB-A- 1 566 804
- GB-A- 2 184 742
- GB-A- 2 219 804
- GB-A- 2 330 556

## Description

The invention relates to a composition for printing recording materials, especially paper or papery substrates, textile fibre materials, plastic films and plastic transparencies by the inkjet printing process and to the use of the compositions for printing the abovementioned recording materials by means of the inkjet printing process and also to the recording materials printed thereby.

InkJet printing processes are becoming more and more important for industrial applications. This process is used for instance in the textile industry to replace printing screen processes. Appreciable cost and time savings are possible as a result, since it is no longer necessary to fabricate the individual screens.

Inkjet printing processes are known. In what follows, the principle of inkjet printing will only be discussed very briefly. Details of this technology are described for example in the Ink-Jet-Printing section of R.W. Kenyon in "Chemistry and Technology of Printing and Imaging Systems", Peter Gregory (editor), Blackie Academic & Professional, Chapmann & Hall 1996, pages 113-138, and references cited therein.

In the inkjet printing process, individual droplets of the ink are sprayed from a nozzle onto a substrate in a controlled manner. The continuous inkjet method and the drop-on-demand method are employed predominantly for this purpose. In the case of the continuous inkjet method, the droplets are produced continuously and droplets not needed for printing are diverted into a collecting vessel and recycled. In the case of the discontinuous drop-on-demand method, by contrast, droplets are generated and printed as desired, i.e. droplets are only generated when this is necessary for printing. The droplets may be generated for example by means of a piezo inkjet head or by means of thermal energy (bubble jet).

By additionally disposing at least one nozzle with yellow, magenta or cyan ink side by side it is possible to obtain colour reproductions in high quality. This process is known as polychromatic printing or, when three colour components are used, as trichromatic printing.

The composition of the invention can be used with all known and suitable inkjet printers for printing paper or papery substrates, textile fibre materials, plastic films and plastic transparencies. This applies not only to the use in monochromatic printing but also to polychromatic printing, especially trichromatic printing.

The composition of the ink for the inkjet printing process has to possess a suitable conductivity, sterility in storage, viscosity and surface tension to meet the specific requirements of inkjet ink. In addition, the prints on the recording materials have to have good properties and fastness.

Useful recording materials, as mentioned above, are preferably paper and papery substrates, textile fibre materials, plastic films and plastic transparencies. But glass and metal may be used as well.

Useful papers or papery substrates include all known such materials. Preference is given to papers or papery substrates coated on at least one side with a material which is particularly receptive to ink compositions. Such papers or papery materials are described inter alia in DE 3018342, DE 4446551, EP 164196 and EP 875393.

Useful textile fibre materials are in particular hydroxyl-containing fibre materials. Preference is given to cellulosic fibre materials, which consist of or comprise cellulose. Examples are natural fibre materials such as cotton, linen or hemp and regenerated fibre materials such as, for example, viscose and also lyocell.

Particular preference is given to viscose or preferably cotton. The fibre materials mentioned are preferably present as sheetlike textile wovens, formed-loop knits or webs.

In a preferred embodiment of the present invention, the printing is preceded by a pretreatment of the fibre material whereby the fibre material to be printed is first treated with an aqueous alkaline liquor and the treated fibre material is dried, if desired.

Useful plastic films or plastic transparencies include all known such materials. Preference is given to plastic films or plastic transparencies coated on at least one side with a material which is particularly receptive to the ink compositions. Such plastic films or plastic transparencies are described inter alia in EP 755332, US 4935307, US 4956230, US 5134198 and US 5219928.

This invention provides a composition for printing recording materials, preferably paper and papery substrates, textile fibre materials, plastic films and plastic transparencies by the inkjet printing process, including
1) at least one dye of the formula (I) 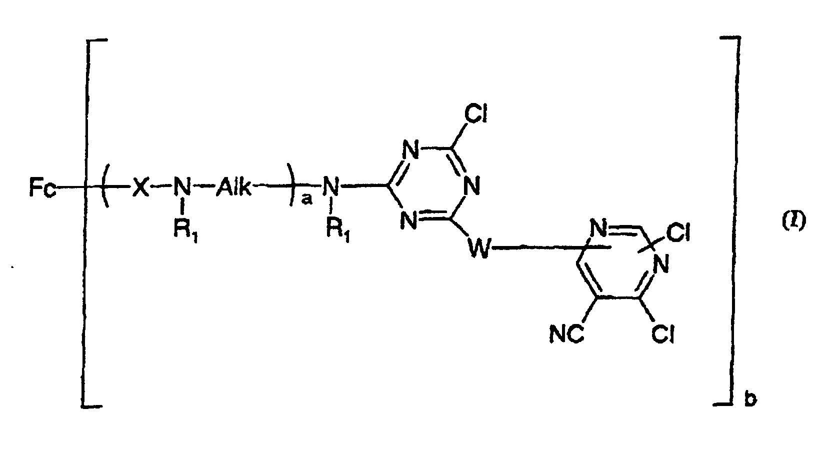 where
   - Fc: is the radical of a metal-free or metal-containing water-soluble chromophore of the azo, formazan, phthalocyanine, azomethine, oxazine, thiazine, phenazine or triphenylmethane series that may contain an additional fibre-reactive group,
   - each a: is independently 0 or 1,
   - each b: is independently 1 or 2,
   - each X: is independently a direct bond, -CO- or -SO₂-,
   - each R₁: is independently hydrogen, unsubstituted C₁₋₄-alkyl or C₁₋₄-alkyl substituted by hydroxyl, halogen, cyano, -SO₃H, -OSO₃H or -COOH,
   - each Alk: is independently C₂₋₄-alkylene,
   - each W: is independently - NR₁-B₁-NR₁, 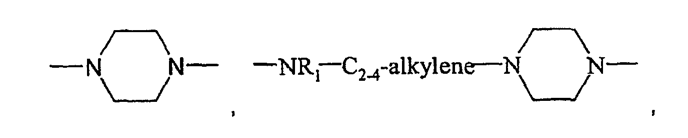 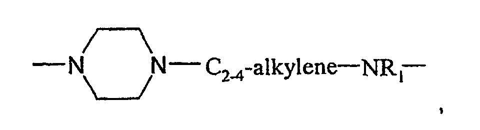 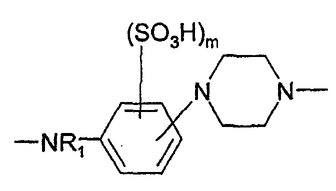
   or 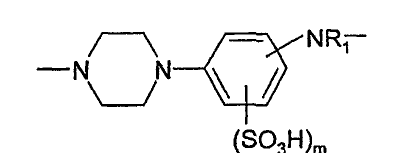 where
   - m: is 0 or 1, and
   - B₁: is C₂₋₆-alkylene, a C₂₋₆-alkylene chain interrupted by -O- or -NR₁-, C₃₋₆-alkylene substituted by one or two hydroxyl groups or by a carboxyl group, or is 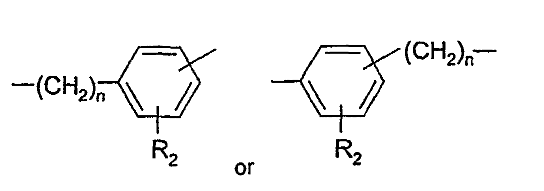
   where
   - n: is 0, 1, 2, 3 or 4 and
   - R₂: is hydrogen, C₁₋₄-alkyl, C₁₋₄-alkoxy, -COOH or -SO₃H,
   as free acid or in salt form, or mixtures of compounds of the formula (I), and
2) water or a medium including a mixture of water and an organic solvent, an anhydrous organic solvent or a solid having a low melting point,
   and
3) optionally further additives.

The dyes used for the inventive composition of the printing ink are mostly known from German Offenlegungsschrift DE 3918653. The preparation of these compounds is likewise carried out according to the synthesis specified in DE 3918653.

The dyes of the formula (I) used in the inks should preferably be low in salt, i.e. have a total salt content of less than 0.5% by weight, based on the weight of the dyes. Dyes having higher salt contents (owing to their preparation and/or the subsequent addition of extenders) may be desalted, for example by means of membrane separation processes, such as ultrafiltration, reverse osmosis or dialysis.

Preferably the dyes in the inks are exclusively sulpho-containing, water-soluble reactive dyes.

The inks preferably include a total amount of dyes of the above formulae (I) which is in the range from 1 to 35% by weight, especially in the range from 2 to 35% by weight, preferably in the range from 2 to 30% by weight, more preferably in the range from 2.5 to 20% by weight, based on the total weight of the ink.

The inks include 99-65% by weight, especially 98-65% by weight, preferably 98-70% by weight, more preferably 97.5-80% by weight, of an abovementioned medium 2), which includes a mixture of water and an organic solvent, an anhydrous organic solvent or a solid having a low melting point.

When said medium 2) is a mixture including water and an organic solvent or an anhydrous organic solvent, then the dye of the formula (I) or mixtures thereof are preferably completely dissolved in this medium.

Preferably the dye of the formula (I) or mixtures thereof have a solubility of not less than 2.5% by weight in this medium 2) at 20°C.

When the ink composition of the invention is used for printing paper or papery substrates, the inks are preferably used together with the following compositions.

When the medium is a mixture of water and an organic solvent, the weight ratio of water to organic solvent is preferably in the range from 99:1 to 1:99, more preferably in the range from 99:1 to 50:50, particularly preferably in the range from 95:5 to 80:20.

It is preferable for the organic solvent which is included in the mixture with water to be a water-soluble solvent or a mixture of various water-soluble solvents. Preferred water-soluble organic solvents are C₁₋₆-alcohols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and keto alcohols, preferably acetone, methyl ethyl ketone, cyclohexanone and diacetone alcohol; water-miscible ethers, preferably tetrahydrofuran and dioxane; diols, preferably diols possessing 2 to 12 carbon atoms, e.g. 1,5-pentanediol, ethylene glycol, propylene glycol, butylene glycol, pentylene glycol, hexylene glycol and thiodiglycol and oligo- and poly-alkylene glycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols possessing 2 to 12 carbon atoms, particularly preferably 2-methoxyethanol, 2-(2-methoxyethoxy)ethanol, 2-(2-ethoxyethoxy)ethanol, 2-[2-(2-methoxyethoxy)ethoxy]ethanol, 2-[2-(2-ethoxyethoxy)ethoxy]ethanol and ethylene glycol monoallyl ether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulphoxides, preferably dimethyl sulphoxide and sulpholane.

In a preferred composition, the medium as per 2) includes water and at least 2 or more, more preferably 2 to 8, water-soluble organic solvents.

Particularly preferred water-soluble solvents are cyclic amides, particularly 2-pyrrolidone, N-methylpyrrolidone and N-ethylpyrrolidone; diols, preferably 1,5-pentanediol, ethylene glycol, thiodiglycol, diethylene glycol and triethylene glycol; and mono-C₁₋₄-alkyl and C₁₋₄-alkyl ethers of diols, more preferably mono-C₁₋₄-alkyl ethers of diols possessing 2 to 12 carbon atoms, particularly preferably 2-methoxy-2-ethoxy-2-ethoxyethanol.

A preferred medium as per 2) includes:
(a) 75 to 95 parts by weight of water and
(b) 25 to 5 parts of one or more of the following solvents: diethylene glycol, 2-pyrrolidone, thiodiglycol, N-methylpyrrolidone, cyclohexanol, caprolactone, caprolactam and 1,5-pentanediol,
wherein the parts are by weight and all parts of (a) and (b) add up to 100.

Examples of further useful ink compositions including water and one or more organic solvents are found in the Patent Specifications US 4963189, US 4703113, US 4626284 and EP 425150A.

When the medium as per 2) includes an anhydrous (i.e. less than 1% by weight of water) organic solvent, this solvent will have a boiling point of 30 to 200°C, more preferably of 40-150°C, particularly preferably of 50-125°C.

The organic solvent can be water-insoluble, water-soluble or mixtures of such solvents.

Preferred water-soluble organic solvents are all above-described water-soluble organic solvents and mixtures thereof.

Preferred water-insoluble solvents include inter alia aliphatic hydrocarbons; esters, preferably ethyl acetate; chlorinated hydrocarbons, preferably CH₂Cl₂; and ethers, preferably diethyl ether; and mixtures thereof.

When the liquid medium as per 2) includes a water-insoluble organic solvent, it is preferable to add a polar solvent to increase the solubility of the dye in the liquid medium.

Examples of such polar solvents are C₁₋₄-alcohols, preferably ethanol or propanol; ketones, preferably methyl ethyl ketone.

The anhydrous organic solvent can consist of a single solvent or a mixture of 2 or more different solvents.

When it is a mixture of different solvents, a mixture including 2 to 5 different anhydrous solvents is preferred. This makes it possible to provide a medium as per 2) which permits good control of the drying properties and of the stability of the ink composition in storage.

Ink compositions including an anhydrous organic solvent or mixtures thereof are of particular interest when rapid drying times are required and especially when they are used for prints on hydrophobic and non-absorbing substrates, such as plastic, metal and glass.

Preferred low-melting media have a melting point of 60 to 125°C. Useful low-melting solids include long-chain fatty acids or alcohols, preferably those having a C₁₈₋₂₄-carbon chain, and sulphonamides.

The ink composition of the invention may further include as auxiliaries additional components which are normally used in inkjet inks, for example viscosity improvers, surface tension improvers, cogation reducers, ionic or nonionic surfactants and conducting salts.

These auxiliaries are preferably added in an amount of 0-5% by weight.

To prevent precipitations in the ink compositions of the invention, the dyes used have to be purified clean. This can be done with commonly known purifying methods.

When the compositions of the invention are used for printing textile fibre materials, preference is given to using the following compositions.

When printing textile fibre materials, useful additives, as well as the solvents, include water-soluble nonionic cellulose ethers or alginates.

Useful water-soluble nonionic cellulose ethers include for example methyl-, ethyl-, hydroxyethyl-, methylhydroxyethyl-, hydroxypropyl- or hydroxypropylmethyl-cellulose. Preference is given to methylcellulose or in particular hydroxyethylcellulose. Cellulose ethers are customarily used in the ink in an amount of 0.01 to 2% by weight, especially 0.01 to 1% by weight, preferably 0.01 to 0.5% by weight, based on the total weight of the ink.

Useful alginates include in particular alkali metal alginates, preferably sodium alginate. These are customarily used in the ink in an amount of 0.01 to 2% by weight, especially 0.01 to 1% by weight, preferably 0.01 to 0.5% by weight, based on the total weight of the ink.

Both the water-soluble nonionic cellulose ethers used and the alginates are used as thickeners to adjust the ink to a certain viscosity.

Preference is given to ink compositions having a viscosity of 1 to 40 mPa.s, especially 5 to 40 mPa.s, preferably 10 to 40 mPa.s. Ink compositions having a viscosity of 10 to 35 mPa.s are particularly preferred.

Preference is given to ink compositions having a surface tension of 15-73 mN/m, especially 20-65 mN/m, particularly preferably 30-50 mN/m.

Preference is given to ink compositions having a conductivity of 0.1-100 mS/cm, especially 0.5-70 mS/cm, particularly preferably 1.0-60 mS/cm.

The inks may further include buffer substances, for example borax, borate or citrate. Examples are sodium borate, sodium tetraborate and sodium citrate.

They are used in particular in amounts of 0.1 to 3% by weight, preferably 0.1 to 1% by weight, based on the total weight of the ink, to set a pH of for example 5 to 9, especially 6 to 8. A citrate buffer is preferred in the case of alginatic inks.

As further additives the inks may include for example N-methyl-2-pyrrolidone or especially 1,2-propylene glycol. These are customarily used in the ink in an amount of 5 to 30% by weight, especially 5 to 20% by weight, preferably 10 to 20% by weight, based on the total weight of the ink.

The inks may further include customary additives, for example foam suppressants or especially fungal and/or bacterial growth inhibitors. These are customarily used in amounts of 0.01 to 1% by weight, based on the total weight of the ink.

The aqueous alkaline ink includes at least one of the customary bases which are used in conventional reactive printing processes to fix the reactive dyes. The base is used for example in an amount of 10 to 100 g/l of liquor, preferably 10 to 50 g/l of liquor. Useful bases include for example sodium carbonate, sodium hydroxide, disodium phosphate, trisodium phosphate, sodium acetate, sodium propionate, sodium bicarbonate, aqueous ammonia or alkali donors, for example sodium chloroacetate or sodium formate. Preference is given to using sodium bicarbonate, sodium carbonate or a mixture of sodium silicate and sodium carbonate. The pH of the alkaline liquor is generally 7.5 to 13.5, preferably 8.5 to 12.5. As well as the bases, the aqueous alkaline liquor may include further additives, for example hydrotropicizers. The preferred hydrotropicizer is urea, which is used for example in an amount of 25 to 200 g/l of liquor, preferably 50 to 150 g/l of liquor. Preferably the fibre material is dried after the above pretreatment.

After printing, the fibre material is advantageously dried, preferably at temperatures up to 150°C, especially 80 to 120°C, and subsequently subjected to a heat treatment process to complete the print or fix the dye.

The heat treatment can be carried out for example by means of a hot batch process, a thermosoling process or preferably a steaming process. In the steaming process, the printed fibre material is subjected for example to a treatment in a steamer with superheated or nonsuperheated steam, advantageously at a temperature of 95 to 180°C, advantageously in saturated steam. Thereafter the printed fibre material is generally washed off with water in a conventional manner to remove unfixed dye.

The present invention further provides aqueous printing inks for the inkjet printing process, which are characterized in that they include
a) 5 to 35% by weight of at least one dye of the above formula (I) and
b) 0.01 to 2% by weight of a water-soluble nonionic cellulose ether or of an alginate.

The printing inks and also the dyes of the formulae (I) are subject to the above-indicated meanings and preferences.

The prints obtainable by the process of the invention have good general fastnesses, for example a high fibre-dye bond stability not only in the acid but also in the alkaline region, a good lightfastness, good wetfastnesses, such as fastness to washing, water, sea water, crossdying and perspiration, a good chlorine fastness, rub fastness, fastness to hot pressing and pleating and also sharp contours and a high colour strength. The printing inks used are notable for good stability and good viscosity properties. The viscosity remains virtually unchanged even in the event of high shearing forces occurring during printing.

A further aspect of the present invention is the use of the printing ink in trichromatic printing. Trichromatic printing is a very large application for all recording materials. This form of printing is normally carried out with a yellow, red and blue ink composition.

This invention further provides recording materials which have been printed with a composition according to the invention.

The examples hereinbelow illustrate the invention. Temperatures are in degrees Celsius; parts and percentages are by weight, unless otherwise stated.

### Examples of ink compositions:

The fractions of the individual components of the ink compositions
- 1-35 parts: of a dye of the formula (I) and/or its salt or mixtures of various dyes of the formula (I),
- 65-99 parts: of water or a medium including a mixture of water and an organic solvent, an anhydrous organic solvent or a solid having a low melting point and optionally
- 0-5 parts: of one or more additives.

The sum total of all the parts of a composition according to the invention is 100 parts.

A preferred ink composition of the invention consists of
- 6 parts: of a dye of the formula (I) and/or its salt or mixtures of various dyes of the formula (I),
- 20 parts: of glycerol and
- 74 parts: of water.

The abovementioned composition is preferably prepared by heating the medium to 40°C and then adding a dye of the formula (I) or a mixture thereof. The composition is then cooled down to room temperature.

This ink composition is preferably used for printing papers or papery substrates.

A further preferred ink composition according to the invention consists of
- 2 parts: of a dye of the formula (I) and/or its salt or mixtures of various dyes of the formula (I) and
- 98 parts: of a medium consisting of 90 parts of water and 10 parts of 2-pyrrolidone.

This ink composition is preferably used for printing papers or papery substrates.

### APPLICATION EXAMPLES

### APPLICATION EXAMPLE A

An ink consisting of 2.5 parts of the dye of Example 76 of German Offenlegungsschrift DE 3918653

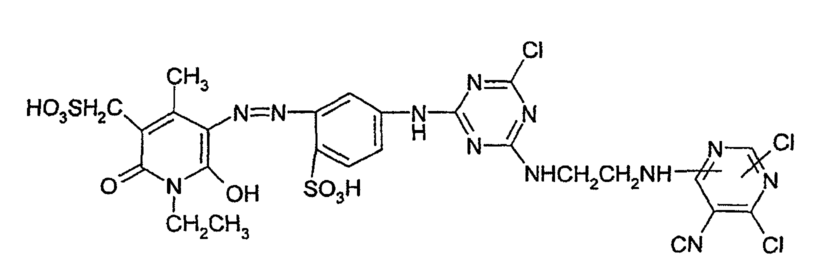

in 97.5 parts of a mixture of water and 2-pyrrolidone where the ratio of water to 2-pyrrolidone is 90:10 is introduced into an HP 880C Deskjet Printer and printed onto an

A4 HP Premium InkJet paper (HP and Deskjet are registered trademarks of Hewlett-Packard, Palo Alto, California, USA). The greenish yellow prints thus obtained have good fastnesses.

This application example can be used in a similar manner for all the examples of German Offenlegungsschrift DE 3918653 which are mentioned in the description.
Similarly, mixtures of individual dyes can be used. The prints thus obtained have good fastnesses.

### APPLICATION EXAMPLE B

For a trichromatic print
a) an ink composition as per Application Example A of the dye of Example 76 of German Offenlegungsschrift DE 3918653 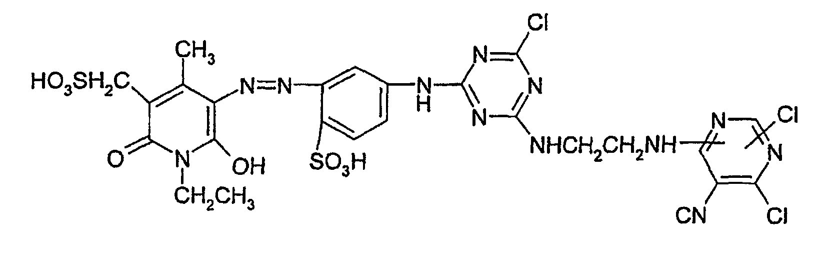
b) an ink composition as per Application Example A of the dye of Example 321 of German Offenlegungsschrift DE 3918653 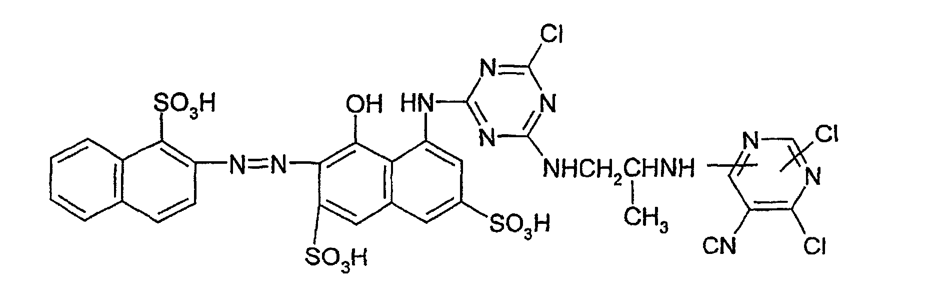 and
c) an ink composition as per Application Example A of the dye of Example 418 of German Offenlegungsschrift DE 3918653 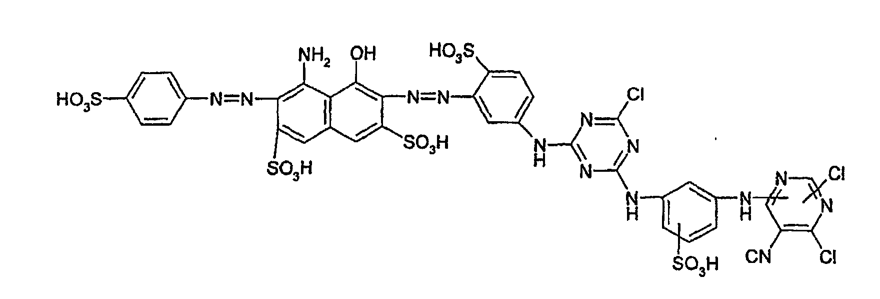 are used together in an HP 880C Deskjet Printer for printing A4 HP Premium Inkjet paper. This choice of the individual ink compositions provides suitable coverage of the colour spectrum. Prints having good fastnesses are obtained.

This application example can be used in a similar manner for all the examples of German Offenlegungsschrift DE 3918653 which are mentioned in the description. Similarly, mixtures of individual dyes can be used. The prints thus obtained have good fastnesses.

### APPLICATION EXAMPLE C

a) Mercerized cotton satin is padded with a liquor containing 30 g/l of sodium carbonate to a wet pick-up of 70% and dried.
b) The cotton satin pretreated as per step a) is printed with an aqueous ink containing
15% by weight of the dye of Example 321 of German Offenlegungsschrift DE 3918653 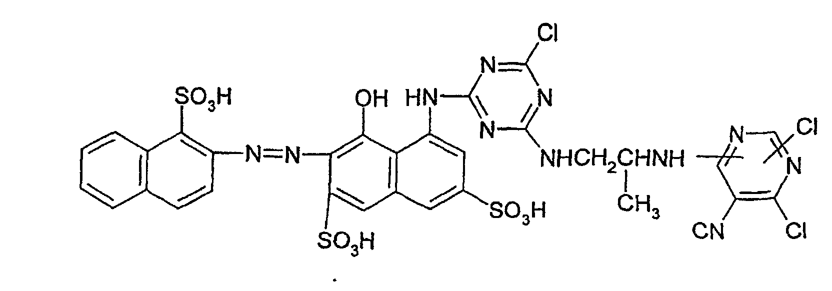 0.3% of hydroxyethylcellulose,
0.5% by weight of borax and
84.2% by weight of water
using a continuous flow inkjet head. The print is completely dried and fixed in saturated steam at 102°C for 4 minutes, rinsed cold, washed off at the boil, rinsed once more and dried. A red print having good fastnesses is obtained.

This application example can be used in a similar manner for all the examples of German Offenlegungsschrift DE 3918653 which are mentioned in the description. Similarly, mixtures of individual dyes can be used. The prints thus obtained have good fastnesses.

### APPLICATION EXAMPLE D

a) Causticized woven viscose is padded with a liquor containing 30 g/l of sodium carbonate to a wet pick-up of 70% and dried.
b) The woven viscose pretreated as per step a) is printed with an aqueous ink containing
   15% by weight of the dye of Example 418 of German Offenlegungsschrift DE 3918653 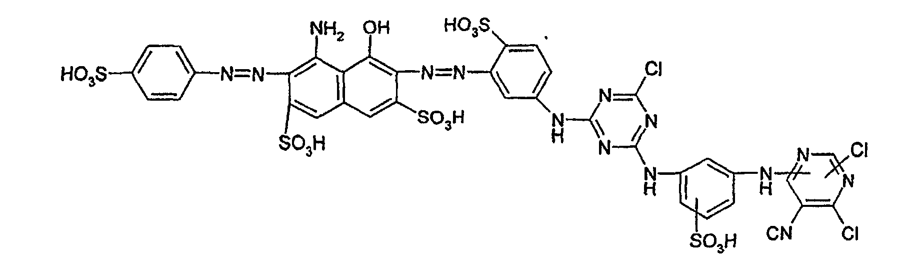 15% by weight of 1,2-propylene glycol and
   70% by weight of water
   using a continuous flow inkjet head. The print is completely dried and fixed in saturated steam at 102°C for 4 minutes, rinsed cold, washed off at the boil, rinsed once more and dried. A navy print having good fastnesses is obtained.

This application example can be used in a similar manner for all the examples of German Offenlegungsschrift DE 3918653 which are mentioned in the description. Similarly, mixtures of individual dyes can be used. The prints thus obtained have good fastnesses.

## Claims

1. A use of a composition for printing recording materials, especially textile fibre materials, paper and papery substrates and plastic films by the inkjet printing process, including
1) at least one dye of the formula (I) 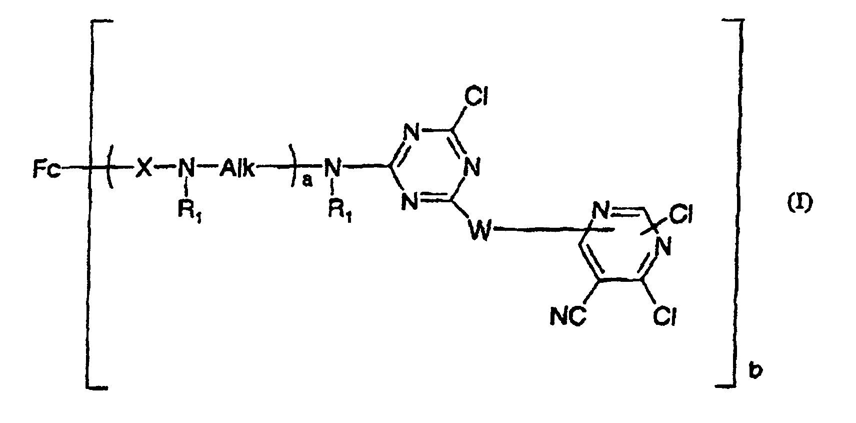 where
Fc is the radical of a metal-free or metal-containing water-soluble chromophore of the azo, formazan, phthalocyanine, azomethine, oxazine, thiazine, phenazine or triphenylmethane series that may contain an additional fibre-reactive group,
each a is independently 0 or 1,
each b is independently 1 or 2,
each X is independently a direct bond, -CO- or -SO₂-,
each R₁ is independently hydrogen, unsubstituted C₁₋₄-alkyl or C₁₋₄-alkyl substituted by hydroxyl, halogen, cyano, -SO₃H, -OSO₃H or -COOH,
each Alk is independently C₂₋₄-alkylene,
each W is independently - NR₁-B₁-NR₁, 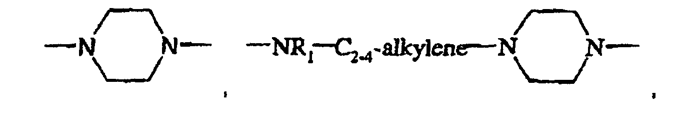 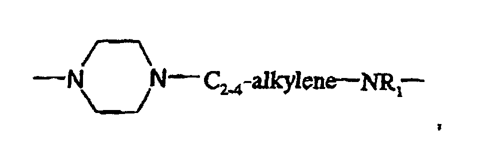 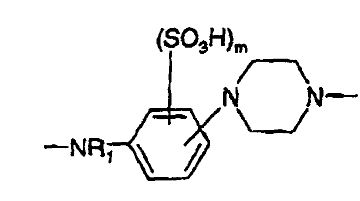
or 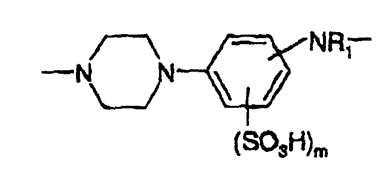 where
m is 0 or 1, and
B₁ is C₂₋₆-alkylene, a C₂₋₆-alkylene chain interrupted by -O- or -NR₁-, C₃₋₆-alkylene substituted by one or two hydroxyl groups or by a carboxyl group, or Is 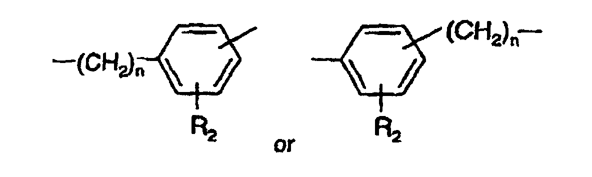
where
n is 0, 1, 2, 3 or 4 and
R₂ is hydrogen, C₁₋₄-alkyl, C₁₋₄-alkoxy, -COOH or - SO₃H,
as free acid or in salt form, or mixtures of compounds of the formula (I),
and
2) water or a medium including a mixture of water and an organic solvent, an anhydrous organic solvent or a solid having a low melting point,
and
3) optionally further additives.

2. A use of a composition according to Claim 1, **characterized in that** it includes
1-35 parts of a dye of the formula (I) and/or its salt or mixtures of various dyes of the formula (I),
65-99 parts of water or a medium including a mixture of water and an organic solvent, an anhydrous organic solvent or a solid having a low melting point and optionally
0-5 parts of one or more additives,
the sum total of all the parts being 100.

3. A use of a composition according to either of Claims 1-2, **characterized in that** it includes
6 parts of a dye of the formula (I) and/or its salt or mixtures of various dyes of the formula (I),
20 parts of glycerol and
74 parts of water.

4. A use of a composition according to either of Claims 1-2, **characterized in that** it includes
2 parts of a dye of the formula (I) and/or its salt or mixtures of various dyes of the formula (I) and
98 parts of a medium consisting of 90 parts of water and 10 parts of 2-pyrrolidone.

5. A use of a composition according to any of Claims 1-4, **characterized in that** the total content of salts Is less than 0.5% by weight, based on the total weight of the dyes.

6. Use according to Claim 1-56 for printing paper and papery substrates, textile fibre materials and plastic films and plastic transparencies.

7. Use of a composition defined in Claim 1-5 in a polychromatic printing process for printing recording materials.

8. Use according to Claim 7, **characterized in that** a trichromatic printing process is used.

9. Use according to Claim 7 or 8 for printing paper and papery substrates, textile fibre materials and plastic films and plastic transparencies.

## Patentansprüche

1. Verwendung einer Zusammensetzung zum Bedrucken von Aufzeichnungsmaterialien, insbesondere von textilen Fasermaterialien, Papier und papierhaltige Substrate und von Plastikfolien mittels dem Tintenstrahldruckverfahren, enthaltend
1) mindestens einen Farbstoff der Formel (I) 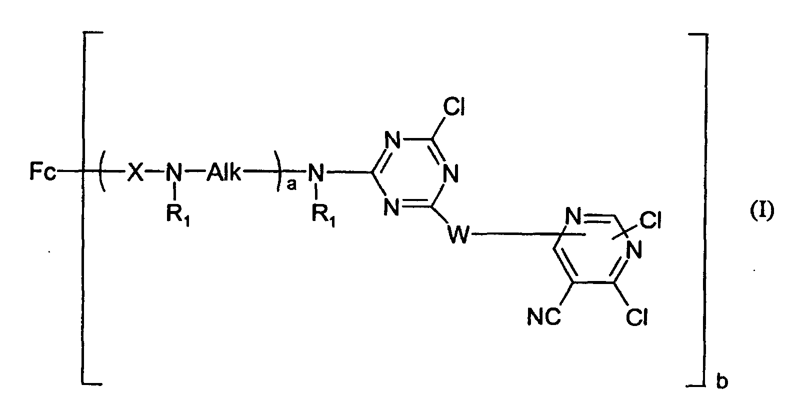 als freie Säure oder in Salzform, worin
Fc für den Rest eines metallfreien oder metallhaltigen wasserlöslichen Chromophors aus der Azo-, Formazan-, Phthalocyanin-, Azomethin-, Oxazin-, Thiazin-, Phenazin- oder Triphenylmethan-Reihe, der eine zusätzliche faserreaktive Gruppe enthalten kann, steht
jedes a unabhängig voneinander für 0 oder 1 steht und
jedes b unabhängig voneinander für 1 oder 2 steht
jedes X unabhängig voneinander eine direkte Bindung, -CO- oder -SO₂-bedeutet,
jedes R₁ unabhängig voneinander Wasserstoff, unsubstituiertes C₁₋₄-Alkyl oder durch Hydroxy, Halogen, Cyan, -SO₃H, -OSO₃H oder -COOH substituiertes C₁₋₄-Alkyl bedeutet, und
jedes Alk unabhängig voneinander C₂₋₄-Alkylen bedeutet,
jedes W unabhängig voneinander für -NR₁-B₁-NR₁, 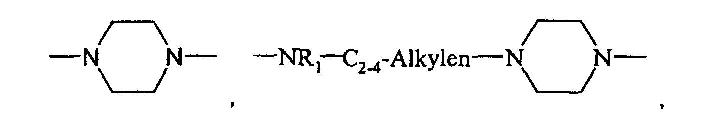 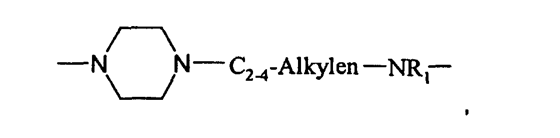 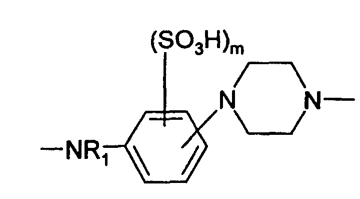
oder 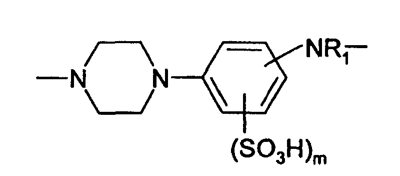 steht, worin
m für 0 oder 1 steht, und
B₁ für C₂₋₆-Alkylen, für eine C₂₋₆-Alkylenkette, die durch -O- oder -NR₁- unterbrochen ist, für durch eine oder zwei Hydroxy-gruppen oder durch eine Carboxygruppe substituierte C₃₋₆-Alkylen, für 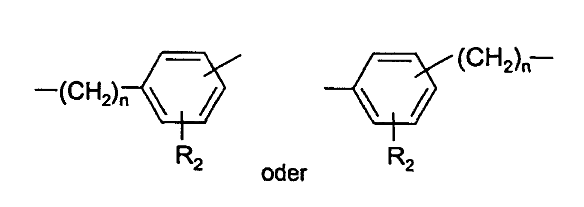 stehen, worin
n 0, 1, 2, 3 oder 4 und
R₂ Wasserstoff, C₁₋₄-Alkyl, C₁₋₄-Alkoxy, -COOH oder -SO₃H bedeuten,
oder Gemische von Verbindungen der Formel (I),
und
2) Wasser oder ein Medium enthaltend ein Gemisch von Wasser und einem organischen Lösungsmittel, ein wasserfreies organisches Lösungsmittel oder ein Festkörper mit einem niedrigen Schmelzpunkt
und
3) gegebenenfalls weitere Zusatzstoffe.

2. Verwendung einer Zusammensetzung nach Anspruch 1 **dadurch gekennzeichnet, dass** diese
1 - 35 Teile eines Farbstoffes der Formel (I) und/oder dessen Salz oder Gemische von verschiedenen Farbstoffen der Formel (I),
65 - 99 Teile Wasser oder eines Mediums enthaltend ein Gemisch von Wasser und einem organischen Lösungsmittel, ein wasserfreies organisches Lösungsmittel oder ein Festkörper mit einem niedrigen Schmelzpunkt und gegebenenfalls
0 - 5 Teile eines oder mehrerer Zusatzstoffe
enthält, wobei die Summe aller Teile 100 ist.

3. Verwendung einer Zusammensetzung nach einem der Ansprüche 1 - 2 **dadurch gekennzeichnet, dass** diese
6 Teile eines Farbstoffes der Formel (I) und/oder dessen Salz oder Gemische von verschiedenen Farbstoffen der Formel (I),
20 Teile Glycerin und
74 Teile Wasser
enthält.

4. Verwendung einer Zusammensetzung nach einem der Ansprüche 1 - 2 **dadurch gekennzeichnet, dass** diese
2 Teile eines Farbstoffes der Formel (I) und/oder dessen Salz oder Gemische von verschiedenen Farbstoffen der Formel (I) und
98 Teile eines Mediums, welches 90 Teilen Wasser und 10 Teilen 2-Pyrrolidon besteht,
enthält.

5. Verwendung einer Zusammensetzung nach einem der Ansprüche 1 - 4 **dadurch gekennzeichnet, dass** der Gesamtgehalt an Salzen weniger als 0.5 Gew-%. bezogen auf das Gesamtgewicht der Farbstoffe beträgt.

6. Verwendung gemäss Anspruch 1 bis 5 zum Bedrucken von Papier und papierhaltigen Substraten, von textilen Fasermaterialien und von Plastikfolien und Plastiktransparenten.

7. Verwendung einer in Anspruch 1 bis 5 definierten Zusammensetzung in einem Polychromiedruckverfahren zum Bedrucken von Aufzeichnungsmaterialien.

8. Verwendung gemäss Anspruch 7 **dadurch gekennzeichnet, dass** ein Trichromiedruckverfahren angewandt wird.

9. Verwendung gemäss Anspruch 7 oder 8 zum Bedrucken von Papier und papierhaltigen Substraten, von textilen Fasermaterialien und von Plastikfolien und Plastiktransparenten.

## Revendications

1. Utilisation d'une composition pour l'impression de matériaux d'enregistrement, en particulier de matériaux en fibres textiles, de substrats de papier et de papeterie et de films plastiques par le procédé d'impression à jet d'encre, comprenant
1) au moins un colorant de formule (I) 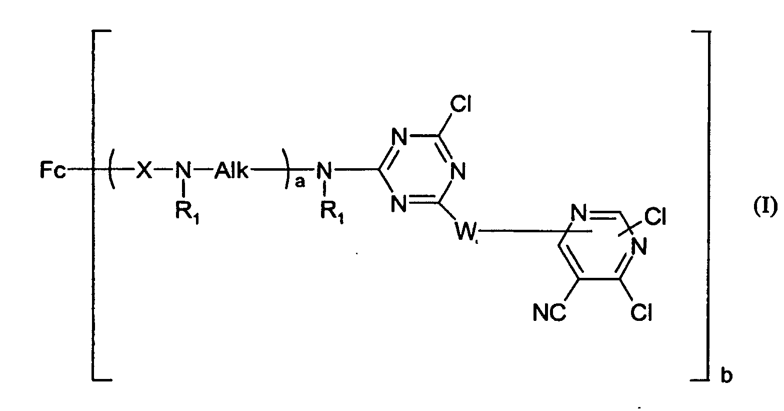 dans laquelle
Fc est le radical d'un chromophore soluble dans l'eau, exempt de métal ou contenant un métal, de la série des azo, formazane, phtalocyanine, azométhine, oxazine, thiazine, phénazine ou triphénylméthane, qui peuvent contenir un groupement supplémentaire réagissant aux fibres,
chaque a est indépendamment 0 ou 1,
chaque b est indépendamment 1 ou 2,
chaque X est indépendamment une liaison directe, -CO- ou -SO₂-,
chaque R₁ est indépendamment de l'hydrogène, un alkyle en C₁-C₄ non substitué ou un alkyle en C₁-C₄ substitué par un hydroxyle, un halogène, un cyano, -SO₃H, -OSO₃H ou -COOH,
chaque Alk est indépendamment un alkylène en C₂-C₄,
chaque W est indépendamment -NR₁-B₁-NR₁, 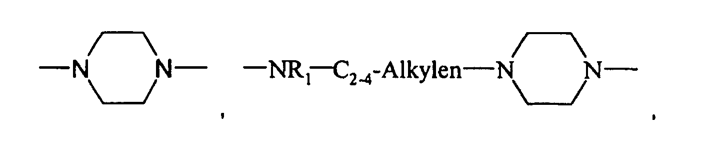 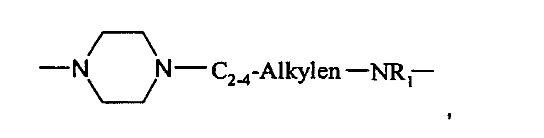 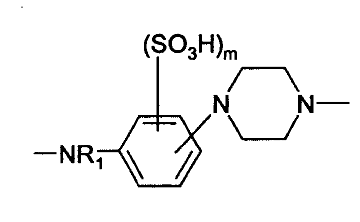
ou 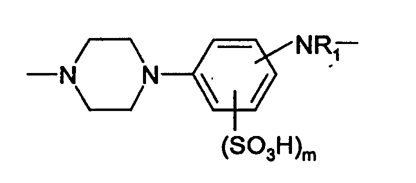 dans laquelle
m est 0 ou 1, et
B₁ est un alkylène en C₂-C₆, une chaîne alkylène en C₂-C₆ interrompue par -O- ou -NR₁-, un alkylène en C₃-C₆ substitué par un ou deux groupements hydroxyle ou par un groupement carboxyle, ou est 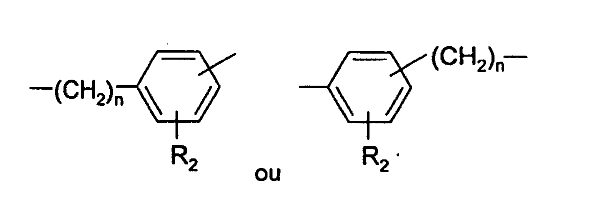 dans laquelle
n est 0, 1, 2, 3 ou 4, et
R² est de l'hydrogène, un alkyle en C₁-C₄, un alcoxy en C₁-C₄, -COOH ou -SO₃H,
sous forme d'acide libre ou de sel, ou des mélanges de composés de formule (I),
et
2) de l'eau ou un milieu comprenant un mélange d'eau et d'un solvant organique, d'un solvant organique anhydre ou d'un solide ayant un faible point de fusion,
et
3) facultativement, d'autres additifs.

2. Utilisation d'une composition selon la revendication 1, **caractérisée en ce qu'**elle comprend
1 à 35 parties d'un colorant de formule (I) et/ou de son sel ou de mélanges de divers colorants de formule (I),
65 à 99 parties d'eau ou d'un milieu comprenant un mélange d'eau et d'un solvant organique, d'un solvant organique anhydre ou d'un solide ayant un faible point de fusion et, facultativement,
0 à 5 parties d'un ou plusieurs additifs,
la somme totale de toutes les parties étant de 100.

3. Utilisation d'une composition selon l'une quelconque des revendications 1 et 2, **caractérisée en ce qu'**elle comprend
6 parties d'un colorant de formule (I) et/ou de son sel ou de mélanges de divers colorants de formule (I),
20 parties de glycérol, et
74 parties d'eau.

4. Utilisation d'une composition selon l'une quelconque des revendications 1 et 2, **caractérisée en ce qu'**elle comprend
2 parties d'un colorant de formule (I) et/ou de son sel ou de mélanges de divers colorants de formule (I), et
98 parties d'un milieu constitué de 90 parties d'eau et 10 parties de 2-pyrrolidone.

5. Utilisation d'une composition selon l'une quelconque des revendications 1 à 4, **caractérisée en ce que** la teneur totale en sels est inférieure à 0,5% en poids par rapport au poids total des colorants.

6. Utilisation selon les revendications 1 à 5 pour l'impression de substrats de papier et de papeterie, de matériaux en fibres textiles, de films plastiques et de diapositives plastiques.

7. Utilisation d'une composition définie selon les revendications 1 à 5 dans un procédé d'impression polychrome pour imprimer des matériaux d'enregistrement.

8. Utilisation selon la revendication 7, **caractérisée en ce qu'**un procédé d'impression trichrome est utilisé.

9. Utilisation selon la revendication 7 ou 8 pour l'impression de substrats de papier et de papeterie, de matériaux en fibres textiles, de films plastiques et de diapositives transparentes.
